# EUROPEAN PATENT APPLICATION

(11) **EP 2 883 460 A1**
(43) Date of publication of application: **17.06.2015**
(21) Application number: 14195459.4
(22) Date of filing: 28.11.2014
(51) Int. Cl.: A23L 1/305, A23L 1/314, A23K 1/00, C12P 7/06

(54) **Pulse fermentation**

(30) Priority: 10.12.2013 GB 201321838
(71) Applicant: Nyinaku, Anthony, Winchestown, South Wales NP23 4BB (GB)
(72) Inventor: Nyinaku, Anthony, Winchestown, South Wales NP23 4BB (GB)
(74) Representative: Hutter, Anton

(57) **Abstract**

The invention relates to pulse fermentation, and in particular to a novel method for fermenting pulses in food processing. The invention extends to novel foodstuffs comprising the fermented pulses.

## Description

The invention relates to pulse fermentation, and in particular to a novel method for fermenting pulses in food processing. The invention extends to novel foodstuffs comprising the fermented pulses.

A legume is a plant in the family Fabaceae (or Leguminosae) or the fruit or seed of such a plant. Legumes are grown agriculturally, primarily for their food grain sees (e.g. beans and lentils, or generally pulses). Well-known legumes include alfalfa, peas, beans, lentils, pulses, peanuts, and soybeans. The soybean is a species of legume native to East Asia, widely grown for its edible bean which has numerous uses. For example, "Douchi" is a type of fermented and salted soybean, also known as fermented black soybeans, Chinese fermented black beans, salted black beans, or just black beans. They are used as a popular flavouring in Chinese cuisine, where they are most widely used for making black bean sauce.

Douchi is made by a two-part process, which involves fermenting and then salting black soybeans. The process turns the beans black, soft and mostly dry. The resultant flavour is sharp, pungent and spicy in aroma, with a taste that is salty and bitter/sweet. The process of Douchi preparation is similar to that of soy sauce fermentation. Fermentation in food processing, for example in producing Douchi, involves micro-organisms causing the anaerobic conversion of carbohydrates to alcohols and carbon dioxide, or organic acids, using yeasts and/or bacteria.

The traditional method used for producing Douchi involves initially cooking a black bean substrate, and allowing it to cool. The cooled substrate is then inoculated with a previous culture of fermented black bean containing a mixed population of micro-organisms. Once the substrate is fully covered with sporulated mycelia, the entire batch is sun-dried until the moisture content has significantly diminished. The product is then rinsed with brine, and then ginger and more brine are added, and the product is then allowed to age (i.e. anaerobic fermentation) under pressure for up to 1-2 years, to create the final product. The resultant fermented, flavoured black beans are then sun-dried once again until they have a texture similar to that of raisins.

Problems associated with the traditional method for fermenting black beans are manifold. Firstly, a significant problem with the traditional method is that it takes a very long time, i.e. at least 1-2 years, while the beans are allowed to slowly ferment in the presence of the micro-organisms, ginger and brine. A problem with extended fermentation periods is that of cost. Another is that glutamate is converted to pyroglutamate, which relatively insipid when compared to glutamate, produces a poor flavoured product. Furthermore, there is a constant risk that unwanted micro-organisms will contaminate the fermentation pot. For example, certain yeasts and bacteria can have much faster growth rates than that of the desired fermenting micro-organisms, and will therefore out-compete them, thereby compromising the fermentation process, and the final fermented product. As a result, batches of fermented black bean may have to be destroyed, resulting in wastage.

Another problem associated with the traditional method is that certain steps of the process are heavily reliant on the weather, i.e. the sun-drying steps. As such, the process cannot be carried out in countries with a poor climate. Furthermore, it is not easy to control the moisture content of the beans, and thus their texture, which is clearly very important when producing this foodstuff.

In view of the above, there is therefore a need to provide an improved method for producing fermented black beans, and other pulses.

Hence, according to a first aspect of the invention, there is provided a method for producing a fermented pulse, the method comprising:-
(i) soaking a pulse in water until it is rehydrated;
(ii) autoclaving the rehydrated pulse;
(iii) allowing the autoclaved pulse to cool;
(iv) inoculating the cooled pulse with a first inoculum comprising fungus, and a second inoculum comprising yeast and/or bacteria; and
(v) incubating the inoculated pulse such that fermentation occurs, thereby producing a fermented pulse.

Advantageously, the method of the first aspect is significantly quicker compared to the traditional method, and can be completed in only 21-28 days. The method takes only 3-4 weeks to achieve a wholesome black bean yield, and the finished product is also very stable for many months, i.e. stable fermented pulse. Clearly, given that the traditional method used for producing fermented black beans takes 1-2 years, the method of the invention is a dramatic improvement, as a 3-week process is commercially far superior to one which takes a minimum of a year.

In addition, the method of the invention reduces or eliminates the risk of contamination by unwanted micro-organisms, and so there is less chance of having to abort the fermentation and waste the foodstuff. Furthermore, the method is not climate- or weather-dependent, because it does not rely on any sun-drying steps, and so can be performed in countries with a poor climate. Another advantage is that the texture of the bean is retained due to the improved moisture control. Also, a lower salt concentration can be maintained using the method of the invention without risking the microbiological safety of the product.

The method surprisingly solves the problems with the removal of hemagglutinins, phytates, lectins and similar trypsin inhibitors. Furthermore, the method of the invention does not require the addition of Ferrous sulphate to the product for depth of colour, a tradition practised in some production areas. In addition, the method yields a stronger volatile (i.e. alcoholic) bouquet, as well as a superior umami flavour. This flavour advantage is believed to result from the relatively short fermentation duration. The fact that the fermentation process is much shorter means that glutamate is not converted into insipid pyroglutamate. Unlike the prolonged traditional fermentation method, the initially generated glutamine yield from the early stages of the mould hydrolysis is retained to the end of the fermentation process in the method of the invention. Glutamine is a product of the proteolysis of peptides from the substrates. By deamination, glutaminase from the fungus catalyses glutamine to yield glutamic acid. Consequently, it is indispensable for flavour enhancement. Although present in the moromi, in time, glutamate reduces in quantity and activity with undesirable effects on flavour. Inactivation or reduction of glutaminase over time permits glutamine to change non-enzymatically into pyroglutamic acid, which is relatively insipid when compared to glutamate. This explains the loss of flavour over prolonged periods of fermentation using the traditional method.

Advantageously the method of black bean fermentation is applicable to all pulses. It works well as long as the mould exhibits good growth on the substrate used. The dark colour development is the result of Maillard reactions between reducing sugars and amino acids generated from the initial enzymatic hydrolysis by the mould on the substrate used. Because the micro-organisms that are used in the fermentation produce such a wide range of enzymes necessary for the catalysis of carbohydrates, lipids and proteins, the method is a straightforward way of flavour development from substrates that are otherwise rather insipid.

The inventors have shown that the method of the first aspect can be applied to a wide variety of different pulses or pulse crops. The pulse preferably comprises a bean. Preferably, the bean is selected from a group of beans consisting of: a fava bean (i.e. a broad bean), a turtle bean, a soya bean, a haricot bean, an adzuki bean, a chilli bean, a flageolet bean, a navy been, a read bean and a black bean. Many of these beans are relatively bland in flavour, and advantageously the method of the invention brings an acceptable taste to these bland beany products. Most preferably, however, the pulse is a soya bean or black bean.

Step (i) may comprise controlling moisture in the pulse during the production method. The prior art method involves removing hemagglutinins, phytates, lectins and similar trypsin inhibitors from pulses using a long soak and wash process. However, a long soak and wash makes the pulses too soft for fermentation to match the firm traditional texture that is required. Over-soaking at the wrong temperature for the wrong duration yields a product that is too damp and rehydrated to ferment safely and adequately. In order to overcome this problem, the short controlled soaking time, followed by an adequate fermentation significantly reduces the levels of these trypsin inhibitors and agglutinins to an acceptable level without making the beans too soft and mushy. Preferably, step (i) comprises soaking the pulse at a temperature in the range of 10-40°C for between 30 and 120 minutes, more preferably in the range of 20-30°C for between 60 and 90 minutes. Any of the temperature ranges described herein can be combined with any of the time ranges described herein. Preferably, the substrate is stirred occasionally and the soak water is changed at least once approximately between 20-40 minutes, prior to the autoclaving step. It is important not to over-soak or use too high a temperature during the soaking step (i), otherwise the pulse will not yield an acceptable traditional texture.

Step (ii) comprises autoclaving the soaked, and therefore re-hydrated, pulse. The temperature of the autoclaving step is preferably at least 105°C, more preferably at least 110°C, even more preferable at least 115°C, and most preferably at least 121°C. Preferably, autoclaving is conducted at a pressure of between 1 and 1.6 Bar. Preferably, autoclaving is for a duration of between 10 and 40 minutes, more preferably between 20 and 35 minutes. Any of the temperature ranges described herein can be combined with any of the time ranges described herein. Over pressurisation and overcooking can result in the finished product being too soft to touch and uncharacteristic of the traditional black bean pellets. Accordingly, the autoclave pressure, temperature and duration should not be exceeded as the pulses will be unacceptably affected.

Preferably, following autoclaving, the autoclave is depressurized as quickly as possible, and the substrate is then allowed to cool in step (iii). The pulse is preferably cooled to between 20°C and 35°C, more preferably between 20°C to 30°C, such that it is ready for inoculation in step (iv). Cooling should be controlled in such a way as to reduce the incidence of adventitious moulds inoculating and therefore contaminating the pulse. The quicker the cooling step, the less likely the pulse will become contaminated by unwanted microorganisms. Hence, in one embodiment, the cooling step may comprise the use of cool air, which is preferably filtered, which accelerates cooling.

Preferably, step (iv) comprises inoculating the cooled pulse with the first inoculum and subsequently with the second inoculum, preferably after 24 to 36 hours cultivation. Preferably, the first inoculum comprises any fungus, more preferably a filamentous fungus. Preferably, the first inoculum comprises *Aspergillus spp.* More preferably, the first inoculum comprises *Aspergillus flavus* and/or *Aspergillus oryzae* (i.e. koji). The first inoculum preferably comprises a microbial concentration of about 0.01 to 0.05% (w/w) micro-organisms per pulse substrate, more preferably about 0.2 to 0.5% (w/w) microorganisms per pulse substrate. Prior to inoculation of the cooled pulse, the first incoculum is preferably prepared by contacting the micro-organisms (i.e. fungus) with a carbohydrate material (such as heat-treated wheat flour or rice flour) before applying the inoculum to the cooled pulse. Advantageously, this ensures that a more even spread of microbial culture is achieved and the resultant culture is significantly evenly mixed. Fine flour at 1% (w/w) substrate is used for good adherence on beans.

It is preferred that the inoculated pulse is incubated with the first inoculum at a temperature between 21 and 35°C for between 20 and 40 hours, more preferably between 25°C and 30°C for between 24 and 30 hours. Any of the temperature ranges described herein can be combined with any of the time ranges described herein. Preferably, the relative humidity of the incubated pulse is maintained at above 60%, more preferably above 70%, and most preferably above 75%. Preferably, the incubation atmosphere is maintained continuously damp and dark during the growth of the culture. It will be appreciated that the fungal culture's germination and growth is exothermic, and so the method may comprise cooling the temperature of the inoculated pulse. In one embodiment, cooling may comprise the use of cool air, which is preferably filtered, which accelerates cooling. In another embodiment, however, the inoculated pulse may be lifted, split and/or turned in order to improve ventilation and dissipate heat.

Once the pulse that has been inoculated with the first inoculum has been allowed to cool, it is then preferably inoculated with the second inoculum comprising yeast and/or bacteria in step (iv). The second inoculum may comprise yeast or bacteria. The second inoculum preferably comprises yeast and bacteria.The yeast may be selected from *Candida spp.* and *Zygosaccharomyces spp.* A preferred Candida strain includes *Candida versatilis,* and a preferred *Zygosaccharomyces* strain includes *Zygosaccharomyces rouxii.* A preferred bacterium used in the second inoculum may comprise *Lactobacillus spp.,* preferably *Lactobacillus halophilus,* most preferably *Pediococcus halophilus spp.*

Traditional fermentations are vulnerable to a wide range of mixed incidental cultures of indefinite characteristics. Thus, by using a selected collection of controlled microorganisms as outlined herein, the risk of development of MCPD's (2-monochloro-1, 3-propandiol; and 3-monochloropropane-1, 2 diol), DCP's (1,3-dichloro-2-propanol; and 2, 3-dichloro-2-propanol) and Aflatoxins are confidently diminished. MCPD's and DCP's are chloropropanols identified with a wide range of heat-treated cereal based foods especially acid hydrolysed soy sauces and malt extracts. Being suspected as potentially mutagenic, the EC recommends that sources of these materials be reduced to levels below 20 micrograms/kg in soy sauces and hydrolysed vegetable proteins.

In some embodiments, step (iv) may comprise use of three separate inocula, i.e. the first inoculum comprising fungus, the second inoculum comprising yeast and/or bacteria, and third inoculum comprising the other of yeast and/or bacteria. Preferably, however, the second inoculum is a mixed liquid culture of yeast and bacteria, which is applied to the pulse that has already been incubated with the first inoculum. Preferably, the cultured pulse is inoculated with the second inoculum at a temperature of between 30 and 50°C for between 2 and 8 days, more preferably between 35°C and 47°C for between 3 and 7 days, and most preferably between 40°C and 45°C for between 4 and 6 days. It will be appreciated that primary fermentation occurs during this step.

Preferably, either during or after the primary fermentation stage, the pulse is contacted with salt. Preferably, salt is added after the first three days of the fungal incubation. Preferably, 5-10% (w/w) of salt is added, more preferably 7-12% (w/w) of salt is added. Preferably, the pulse substrate is then mixed.

Preferably, the fermentation temperature is between 45°C and 70°C for between 5 and 20 days, more preferably between 50°C and 65°C for between 8 and 18 days, and most preferably between 55°C and 60°C for between 12 and 16 days. It will be appreciated that secondary fermentation occurs during this step. Preferably, secondary fermentation is allowed to proceed for at least 1-2 weeks. Any of the temperature ranges described herein can be combined with any of the time ranges described herein.

The method may comprise a step of contacting the fermenting pulse with brine, in order to redistribute the moisture levels. Preferably, 1-10% (w/w) is added, more preferably 3-7% (w/w).

The method may comprise a step of contacting the fermenting pulse with ginger.

Advantageously, and preferably, the method does not comprise a step of adding ferrous sulphate.

At the end of fermentation, the method preferably comprises harvesting the resultant fermented pulse. The method may comprise the addition of further fine granular salt.

Preferably, the method comprises packaging and sealing the fermented pulse while it is still warm. Advantageously, in doing so, this yields a nice and glossy product without unsightly salt granules.

Thus, according to a second aspect, there is provided a fermented pulse obtained by the method of the first aspect.

The appearance and texture of the pulse is will be dark-brown to black, glossy and firm to touch with no unsightly mouldy sections anywhere. Each individual pulse will be entirely dark all the way though as if it has had the prolonged traditional fermentation technique. The fermented pulse may then be combined later with additional ingredients to form resultant foodstuffs, such as Chinese and Malaysian cooking sauce. Hence, according to a third aspect, there is provided a foodstuff comprising the fermented pulse of the second aspect.

The foodstuff may be one of several Chinese and Malaysian, chicken, beef, shrimp, and mushroom sauces. Black beans as cooking ingredients (not a table condiment) are used to make this wide variety of sauces and sauce blends.

All of the features described herein (including accompanying claims, abstract and drawings), and/or all of the steps of any method or process so disclosed, may be combined with any of the above aspects in any combination, except combinations where at least some of such features and/or steps are mutually exclusive.

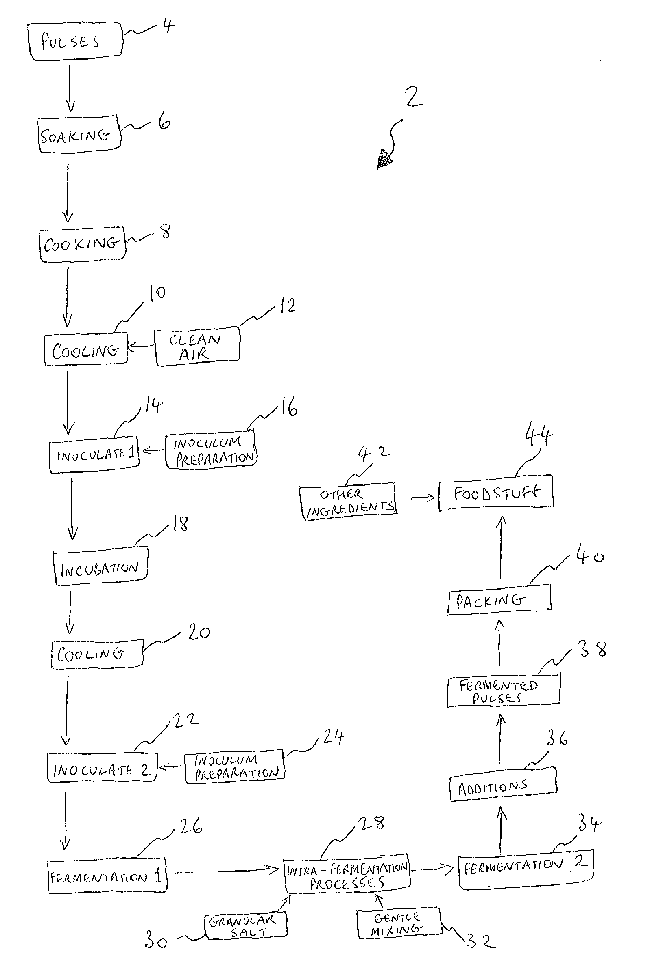

For a better understanding of the invention, and to show how embodiments of the same may be carried into effect, reference will now be made, by way of example, to the accompanying drawings, in which:-
Figure 1 shows a flow diagram of one embodiment of a method for fermenting a pulse, such as a black bean, and for producing a foodstuff therewith.

### Example

The inventors have developed a novel method 2 for fermenting pulses 4, such as black beans. Referring to Figure 1, there is shown a schematic drawing illustrating each of the steps of the method 2.

### Step 1 - Re-hydration of dry pulses and moisture control (6)

Moisture control is important for keeping the pulses 4 wholesome during the production method. The recommended prior art method of removal of hemagglutinins, phytates, lectins and similar trypsin inhibitors from pulses, is a long soak and wash. However, a problem with long soaking/washing is that, although rendering the pulses safe for human consumption, it makes most pulses too soft for fermentation to match the firm traditional texture that is required. Over-soaking at the wrong temperature for the wrong duration yields a product that is too damp to ferment safely and adequately. Traditionally, black bean fermentation would require months of slow transformations (based significantly on changeable environmental conditions, such as sunlight). Since the principal recommended method of removal of phytohemagglutinins, phytates and lectins from pulses actually damages the beans, a different approach is required, and this is the first step where the method 2 of the invention differs from the prior art method. A short controlled soaking time, followed by an adequate fermentation significantly reduces the levels of these trypsin inhibitors and agglutinins to an acceptable level without making the beans too soft and mushy. If the beans must be soft to start with, but end up with the right, firm texture, they have to be eventually desiccated following fermentation to be acceptable. This implies a further processing cost for such a relatively low value product.

For pulses 4 with a moisture content of about 17% (w/w), it is necessary to soak them 6 in a lot of water for a period of no more than 90 minutes at 20°C to 30°C. The mixture is stirred occasionally and the soak water is changed at least once every half hour, prior to autoclaving. It is important not to over-soak or use a higher temperature for the duration otherwise the pulses 4 will not yield an acceptable traditional texture.

### Step 2 - Autoclaving/Cooking (8)

The rehydrated pulses 4 are autoclaved or cooked 8 at 121°C at 5Bar (22psi) for a duration of 20 minutes. Over pressurisation and overcooking will result in the finished product being too soft to touch and uncharacteristic of the traditional black bean pellets. Ideally, the autoclave 8 pressure and time indications should not be exceeded as the pulses 4 will be similarly unacceptably affected.

### Step 3 - Cooling (10)

The autoclave is then depressurized as quickly as possible and the pulses 4 are then allowed to cool to between 30°C to 35°C ready for inoculation. Cooling 10 must be controlled in such a way as to reduce the incidence of adventitious moulds inoculating and therefore contaminating the pulse substrate 4. The high concentration of *Aspergilli* conidial inoculum used in the subsequent step 14 should help overwhelm the substrate 4, and thus dictate the overall nature of the subsequent fermentation. Nevertheless, the pulses 4 are allowed to cool 10 down in a clean-air atmosphere. If filtered clean air 12 is available, that is employed to accelerate cooling 10. The quicker the cooling process 10, the less likely the pulses 4 will become contaminated by other unwanted microorganisms.

### Step 4 - Inoculation 1 (14)

The cooled beans are inoculated or seeded 14 with koji conidia (*Aspergillus oryzae. Aspergillus flavus,* or combinations thereof) at minimum inoculum of 0.1% (w/w) culture concentration to substrate. To achieve an effective distribution of the mycelia over the entire surface of the substrate, it is helpful to prepare the inoculum 16 by mixing the microbial culture into a tangible quantity of powdered carbohydrate material (such as heat-treated wheat flour or rice flour) before applying the inoculum 14 to the cooled pulse substrate. This ensures that a more even spread of microbial culture is achieved and the resultant culture is significantly evenly mixed. Flour at 1% (w/w) substrate is used for good adherence on beans. To prevent stickiness of gluten in wheat flour from gelling, excessive mixing, rubbing or turning of the substrate should be avoided during the addition into the pulses substrate. Also, it is mixed at the lowest temperature on cooling. Conidia would get trapped under gelled starch and thus stifle germination, so it is good to dust spores onto the substrate surface and best to mix in briefly and gently.

### Step 5 - Incubation (18)

*Aspergillus sp.* are mesophilic, aerobic and asexual moulds and will thrive best at a moisture level of above 75% Relative Humidity at 30°C. Inoculated pulses should be spread at between 6cm and 10cm deep. This is best incubated 18 in a well-ventilated basket, perforated tray or slatted container to allow good air circulation. This allows for both enough moisture retention and heat dissipation concurrently. The incubation room 18 is kept ventilated and held at a temperature between 25°C and 30°C for between 24 and 30 hours. As much as possible, the incubation atmosphere is maintained continuously damp and dark during the growth of the culture. It should be appreciated that mould germination and growth is exothermic, and so temperature minimisation will usually come into play. When the temperature needs to be lowered, cold clean air 20 may be blown over it. Alternatively, the pieces of the substrate cakes formed can be gently lifted, split or turned in order to improve ventilation and dissipate heat. An obvious good mould growth around each pulse unit will be the result at this point.

### Step 6 - Inoculation 2 - liquid cultures (22)

Once the cooling step 20 is achieved, the second level of inoculation 22 can be immediately initiated. To do this, the cultured pulses are transferred into a lidded non-perforated food-grade plastic or wooden container. The pulses must not be compacted. The equivalent of 1% (w/w) liquid culture made up of a 50:50 blend of a mixed inoculum culture as described below is then added to the moromi substrate. The inoculum 24 is made three days in advance of the harvesting of the cultures, as follows:
1) Yeast broth is cultivated using one or both of *Candida versatilis* and *Zygosaccharomyces rouxii* on 10% Raw soy sauce, 10% Glucose, 10% Sodium chloride in 70% water at 30°C for 3 days with frequent agitation for aeration.
2) *Lactobacillus (Pediococcus) halophilus* broth is cultivated simultaneously as (1) using 22% Raw soy sauce, 5% Sodium chloride, 3% Glucose in 70% Water at 30°C for 3 days, also with frequent agitation for aeration.

The substrate inoculation should ideally be carried out in a partly closed container (not hermetically sealed) by loosely packing the beans to about 97% the internal volume of the holding container. At this point, there is no need to tightly compress the substrate with weights nor wash the incubated substrate as in the traditional method, because raising the ambient temperature of the container/moromi (at Step 7) will finally kill off the mould mycelia. Also, salt will affect cellular autolysis to release more hydrolytic enzymes for the next essential step of hydrolysis. Note that the liquid cultures to be used are best applied on day three. Consequently, initiation of the liquid culture is to be commenced at the same time as the seeding of the substrate on day one.

### Step 7 - Fermentation 1 (26)

After adding the mixed liquid culture as indicated above, the lidded moromi are kept warm at 40°C-45°C for 5 days to allow fermentation to take place 26.

### Step 8 - Rehydration and salting (28)

Some time during the next couple of days, two intrafermentation steps 28 must be undertaken. Firstly, 3-5% (w/w) more granular salt 30 is added to the moromi substrate. Secondly, the moromi substrate is mixed gently 32 and placed back into the fermentation tube to continue with the fermentation.

### Step 9 - Fermentation 2 and additions (34)

At this point in the process, the fermentation temperature is raised to 55-60°C and held at this temperature for a fortnight. Half way through this fermentation stage 34, the material is inspected for dryness. If the moromi appears too dry, it should be dampened by the addition 36 of a small amount of 5% (w/w) brine and the container contents should be mixed to redistribute the moisture levels. Other additions 36 such as thin slices of fresh ginger root may be added at this stage to correspond to some of traditional practices of black bean flavouring. Another additive which is unnecessary as a result of the method of the invention is ferrous sulphate. This additive is added at a level of 2.5mg/kg by some traditional methods but in the current method, it is unnecessary to use it.

The fermentation 34 is left to proceed until the end of the second week when the resultant fermented pulses 38 can then be harvested for preparation for supply. Once the fermentation 34 has yielded dark, rich, chocolate/raisin-like beans, it can be finalised by the addition of yet more fine granular salt 36, if necessary. Unsightly grains of salt on the pulses can be avoided by the use fine salt. Adding salt at the desired level and mixing in thoroughly while the pulses still retains the fermentation temperature also helps to diminish the persistence of unsightly salt grains.

### Step 10 - Packing (40)

Packaging and sealing 40 takes place while the fermented pulses 38 are still warm. This will yield a nice and glossy product without unsightly salt granules. The appearance and texture of the pulses 38 will be dark-brown to black, glossy and firm to touch with no unsightly mouldy sections anywhere. Each individual pulse 38 will be entirely dark all the way though as if it has had the prolonged traditional fermentation technique. The fermented pulses 38 can then be combined later with additional ingredients 42 to form resultant foodstuffs 44, such as Chinese or Malaysian chicken, beef, shrimp, or mushroom sauce. Black bean is a cooking ingredient (not a table condiment) so is used to make this wide variety of sauces and sauce blends to enhance flavours and/or add natural colour.

### Conclusions

### Product benefits & attributes

The method of production has several benefits:-
1) It is significantly quicker compared to the traditional method, and not subject to any environmental constraints. The method takes barely 3 weeks to achieve a wholesome black bean yield. The finished product is also very stable for many months.
2) It successfully deals with the issues of removal of hemagglutinins, phytates, lectins and similar trypsin inhibitors.
3) It does not require the addition of Ferrous sulphate to the product for depth of colour, a tradition practised in some production areas.
4) It yields a stronger volatile (alcoholic) bouquet as well as a superior umami flavour. The flavour aspect is most probably due to the relatively short fermentation duration. Unlike the prolonged traditional fermentation, the initially generated glutamine yield from the early stages of the mould hydrolysis is certainly retained to the end of the fermentation process. Glutamine is a product of the proteolysis of peptides from the substrate soya. By deamination, glutaminase from the Asperillus mould, catalyses glutamine to yield glutamic acid. Consequently, it is indispensable for flavour enhancement. Although present in the moromi, in time, it reduces in quantity and activity with undesirable effects on flavour. Inactivation or reduction of glutaminase permits glutamine to change non-enzymatically into pyroglutamic acid which is relatively insipid when compared to glutamate. This explains the loss of flavour over prolonged periods of fermentation. The process of flavour deterioration has also been identified in natural soy sauce fermentations.
5) By using a selected collection of controlled microorganisms, the risk of development of MCPD's, DCP's and Aflatoxins is confidently eliminated. Traditional fermentations are vulnerable to a wide range of mixed incidental cultures of indefinite characteristics.

This streamlined method of black bean fermentation is applicable to all pulses. It works well as long as the mould exhibits good growth on the substrate used. The dark colour development is the result of Maillard reactions between reducing sugars and amino acids generated from the initial enzymatic hydrolysis by the mould on the substrate used. Because the *Asperillus sp.* that are used in the fermentation produce such a wide range of enzymes necessary for the catalysis of carbohydrates, lipids and proteins, the method is a straightforward way of flavour development from substrates that are otherwise rather insipid.

## Claims

1. A method for producing a fermented pulse, the method comprising:-
(i) soaking a pulse in water until it is rehydrated;
(ii) autoclaving the rehydrated pulse;
(iii) allowing the autoclaved pulse to cool;
(iv) inoculating the cooled pulse with a first inoculum comprising fungus, and a second inoculum comprising yeast and/or bacteria; and
(v) incubating the inoculated pulse such that fermentation occurs, thereby producing a fermented pulse.

2. A method according to claim 1, wherein the pulse comprises a bean selected from a group of beans consisting of: a fava bean, a turtle bean, a soya bean, a haricot bean, an adzuki bean, a chilli bean, a flageolet bean, a navy been, a read bean and a black bean.

3. A method according to either claim 1 or claim 2, wherein step (i) comprises soaking the pulse at a temperature in the range of 10-40°C for between 30 and 120 minutes, or in the range of 20-30°C for between 60 and 90 minutes.

4. A method according to any preceding claim, wherein the temperature of the autoclaving step (ii) is at least 105°C, at least 110°C, at least 115°C, or at least 121°C, and is for a duration of between 10 and 40 minutes, or between 20 and 35 minutes.

5. A method according to any preceding claim, wherein step (iii) comprises cooling the pulse to between 20°C and 35°C, or between 20°C to 30°C.

6. A method according to any preceding claim, wherein the first inoculum comprises a filamentous fungus, *Aspergillus spp.,* or *Aspergillus flavus* and/or *Aspergillus oryzae.*

7. A method according to any preceding claim, wherein the inoculated pulse is incubated with the first inoculum at a temperature of between 21 and 35°C for between 20 and 40 hours, or between 25°C and 30°C for between 24 and 30 hours.

8. A method according to any preceding claim, wherein the relative humidity of the incubated pulse during step (iv) is maintained at above 60%, or above 70%, or above 75%.

9. A method according to any preceding claim, wherein the method comprises cooling the temperature of the inoculated pulse using cool air, and once the pulse that has been inoculated with the first inoculum has been allowed to cool, it is then inoculated with the second inoculum comprising yeast and/or bacteria in step (iv).

10. A method according to any preceding claim, wherein the second inoculum comprises yeast and bacteria, wherein the yeast is selected from *Candida spp.* and *Zygosaccharomyces spp.,* optionally wherein the Candida strain is *Candida versatilis,* and the *Zygosaccharomyces* strain is *Zygosaccharomyces rouxii,* and wherein the bacterium in the second inoculum comprises *Lactobacillus spp.,* optionally *Lactobacillus halophilus* or *Pediococcus halophilus spp.*

11. A method according to any preceding claim, wherein the second inoculum is a mixed liquid culture of yeast and bacteria, which is applied to the pulse that has already been incubated with the first inoculum.

12. A method according to any preceding claim, wherein the cultured pulse is inoculated with the second inoculum at a temperature of between 30 and 50°C for between 2 and 8 days, or between 35°C and 47°C for between 3 and 7 days, or between 40°C and 45°C for between 4 and 6 days.

13. A method according to any preceding claim, wherein the fermentation temperature is between 45°C and 70°C for between 5 and 20 days, or between 50°C and 65°C for between 8 and 18 days, or between 55°C and 60°C for between 12 and 16 days.

14. A method according to any preceding claim, wherein the method comprises a step of contacting the fermenting pulse with brine, in order to redistribute the moisture levels, and optionally with ginger.

15. A foodstuff comprising a fermented pulse obtained by the method according to any preceding claim, optionally, wherein the foodstuff is one of Chinese and Malaysian, chicken, beef, shrimp, and mushroom sauce.
